## Europäisches Patentamt

## European Patent Office

## Office européen des brevets

(19)

(11) Numéro de publication: **0 094 853**
**B1**

(12) **FASCICULE DE BREVET EUROPEEN**

(45) Date de publication du fascicule du brevet: **11.06.86**

(51) Int. Cl.⁴: **E 02 B 3/06**

(21) Numéro de dépôt: **83400828.6**

(22) Date de dépôt: **26.04.83**

(54) Procédé et dispositif d'amortissement de houle ou clapot par formation d'un écoulement turbulent au sein du fluide.

(30) Priorité: **13.05.82 FR 8208358**

(43) Date de publication de la demande:
**23.11.83 Bulletin 83/47**

(45) Mention de la délivrance du brevet:
**11.06.86 Bulletin 86/24**

(84) Etats contractants désignés:
**BE DE GB IT NL SE**

(56) Documents cités:
**DE - A - 2 909 169**
**FR - A - 1 513 025**
**FR - A - 2 359 937**
**GB - A - 1 373 035**
**US - A - 3 426 537**
**US - A - 3 465 528**

**INTERNATIONAL CONSTRUCTION, vol. 12, no. 1, avril
1973, page 31 "Floating breakwater gives economic
wave protection"**

(73) Titulaire: **CHANTIERS ET ATELIERS DE LA PERRIERE,
8, boulevard Abbé le Cam, F-56100 Lorient (FR)**

(72) Inventeur: **Govys, Gilbert Adrien, 5, rue de Lall -
Kerhaute, F-56270 Ploemeur (FR)**
Inventeur: **Guitton, Jean-Claude, 29, rue de Kervihan,
F-56260 Larmor Plage (FR)**

(74) Mandataire: **Portal, Gérard et al, Cabinet Z.
Weinstein 20, Avenue de Friedland, F-75008 Paris (FR)**

## Description

L'invention concerne un procédé et un dispositif d'amortissement de houle ou clapot par formation d'un écoulement turbulent au sein du fluide.

On connaît déjà divers dispositifs d'amortissement de houle ou clapot; Par exemple le brevet français N° 2 131 312 (FMC CORPORATION) décrit un appareil destiné à diminuer la violence des vagues et à asservir et utiliser les courants qu'elles produisent comprenant un ensemble de plaques allongées, rigides, incurvées transversalement en forme d'aubes disposées perpendiculairement au sens du déplacement de la houle de manière à intercepter l'eau qu'elles mettent en mouvement et font dévier de leur trajectoire naturelle pour transformer leur mouvement et créer ainsi des courants hydrodynamiques utiles dont on peut se servir pour faire actionner des turbines en vue de récupérer l'énergie de la houle.

Cet appareil permet bien d'amortir la houle mais présente l'inconvénient majeur de supporter tous les efforts d'impact de la houle et nécessite donc des ancrages très lourds et très coûteux pratiquement prohibitifs;

D'autre part, le brevet français TREU N°2 429 871 décrit un brise-lames flottant comportant un plan incliné partiellement ouvert en avant et un plan arrière en principe vertical fermé ou partiellement ouvert disposés perpendiculairement au sens de déplacement de la houle.

Ce brise-lames présente aussi le même inconvénient majeur de subir les efforts d'impact de la houle et nécessite donc de la même manière des ancrages fixes de type pieux par exemple longs et coûteux à mettre en place.

On connaît encore par le brevet français INDUSTRIE PIREL-LI N° 2 414 588 un brise-lames flottant comprenant au moins deux corps fermés de forme allongée disposés de manière que leur grande dimension soit perpendiculaire à la direction des lames incidentes dominantes en étant disposés parallèlement à un certain écartement mutuel. Ces corps fermés sont par ailleurs ancrés sur le fond marin. Les corps fermés peuvent être liés entre eux par une série de tirants en matière flexible qui sont indiqués comme destinés à former une zone de forte turbulence dans la partie du liquide qui est comprise entre les corps fermés allongés.

Cependant, ce brise-lames est d'une faible efficacité en particulier parce qu'il arrive difficilement à créer la zone de forte turbulence indiquée notamment par la présence d'un corps fermé de forme allongée disposé perpendiculairement à la direction des lames incidentes dominantes formant un premier obstacle non productif. D'autre part, par la présence de ces corps fermés ce brise-lames supporte aussi les efforts d'impact et necessite aussi un amarrage au fond important.

On connaît enfin dans les documents US-A-3 465 528 ou US-A-3 426 537 un procédé et un dispositif d'amortissement de houle ou clapot au moyen d'éléments longitudinaux parallèles entre eux et espacés de tels sorte qu'ils créent un écoulement turbulent au sein du fluide. Cependant, dans les deux cas, des éléments sont disposés transversalement de sorte que l'on retrouve au moins en partie les inconvénients mentionnés précédemment relatifs aux autres dispositifs de l'état de la technique.

La présente invention a donc pour but de remédier aux inconvénients de la technique antérieure en fournissant une solution permettant d'aboutir à un amortissement efficace de la houle ou de clapot tout en étant de conception particulièrement simple, légère, peu coûteuse et ne nécessitant qu'un ancrage léger.

Cette solution consiste selon la présente invention en un procédé d'amortissement de houle ou clapot au moyen d'éléments longitudinaux rigides, maintenus en flottaison au voisinage de la surface de l'eau, disposés sensiblement parallèlement entre eux, leur forme, leurs dimensions et leur espacement étant tels, qu'ils créent un écoulement turbulent de l'eau, caractérisé en ce que l'on canalise le courant orbital de surface entre lesdits éléments longitudinaux, ceux-ci étant placés parallèlement au sens de déplacement de la houle.

Selon une caractéristique avantageuse de ce procédé, les éléments longitudinaux sont prévus de manière à former une grande surface développée et comprennent des surfaces horizontale et verticale sensiblement parallèles au sens de déplacement de la houle.

Selon un mode de réalisation préférentiel de ce procédé, on incline d'un angle prédéterminé les éléments longitudinaux de manière que leur extrémité frontale soit à un niveau inférieur par rapport à leur extrémité arrière.

Selon une autre caractéristique particulièrement avantaseuse, on prévoit la longueur des éléments longitudinaux en rapport avec la longueur d'onde de la houle, c'està-dire de l'ordre de grandeur de la longueur d'onde de la houle.

Selon une autre variante de réalisation de ce procédé, on augmente l'inertie de flottaison au tangage en associant un dispositif annexe flottant à l'arrière des éléments longitudinaux et à une certaine distance de ceuxci, constitué de préférence par un autre jeu des mêmes éléments longitudinaux. D'autre part, l'invention concerne aussi un dispositif d'amortissement de houle ou clapot, comprenant une pluralité d'éléments longitudinaux rigides, espacés entre eux, maintenus en flottaison au voisinage de la surface de l'eau, disposés sensiblement parallèlement entre eux, leur forme, leurs dimensions et leur espacement étant tels, qu'ils créent un écoulement turbulent de l'eau, caractérisé en ce que lesdits éléments longitudinaux sont placés sensiblement parallèlement au sens de déplacement de la houle de manière à définir entre eux des couloirs ouverts de canalisation du courant orbital de surface.

Avantageusement, lesdits éléments longitudinaux sont prévus de manière à former une grande surface développée et comprennent des surfaces horizontale et verticale sensiblement parallèles au sens de déplacement de la houle.

Selon un mode de réalisation particulier, les surfaces horizontale et verticale sont combinées entre elles de manière à permettre l'écoulement turbulent précité quelle que soit l'incidence.

D'autre part, selon une variante d'exécution, la longueur des éléments longitudinaux est en rapport avec la longueur d'onde de la houle, c'est-à-dire que leur longueur est de l'ordre de grandeur de la longueur d'onde de la houle.

Selon une autre variante d'exécution, ce dispositif comprend un dispositif annexe flottant à l'arrière des éléments longitudinaux et à une certaine distance de ceux-ci constitue de préférence par un autre jeu desdits mêmes éléments longitudinaux.

Par ailleurs, les éléments longitudinaux sont de préférence maintenus en flottaison sensiblement sous, et au voisinage immédiat de, la surface de l'eau.

Selon un mode de realisation préférentiel les éléments longitudinaux sont assembles en modèles associés euxmêmes entre eux pour constituer une chaîne flottante pratiquement continue.

Selon un mode de realisation particulièrement avantageux, chaque module est incliné d'un angle prédéterminé relativement à la surface en ayant la partie frontale disposée à un niveau inférieur par rapport à la partie arrière. De préférence,cet angle peut être compris entre 5 et 15°.

D'autre part, on peut associer un deuxième module à l'arrière du premier relié au premier par un bras de liaison sensiblement rigide. De préférence ce bras de liaison passe sous le premier module frontal et sur le deuxième module arrière pour former ainsi le dispositif annexe precité;

D'autres buts, caractéristiques et avantages de la presente invention apparaîtront clairement à la lumière de la description explicative qui va suivre faite en réference aux dessins annexés représentant plusieurs modes de réalisation actuellement préférés de l'invention. Dans les dessins:

- la figure 1 représente en perspective une vue de détail d'un module selon la présente invention;
- la figure 2 représente une vue d'ensemble partielle de l'association de plusieurs modules selon l'invention;
- la figure 3 représente un autre mode de réalisation d'un dispositif selon l'invention comprenant en association un module frontal et un module arrière; et
- la figure 4 représente un autre mode de realisation selon l'invention formant une variante d'exécution du mode de réalisation de la figure 3 par l'addition d'un troisième module sous le module frontal.

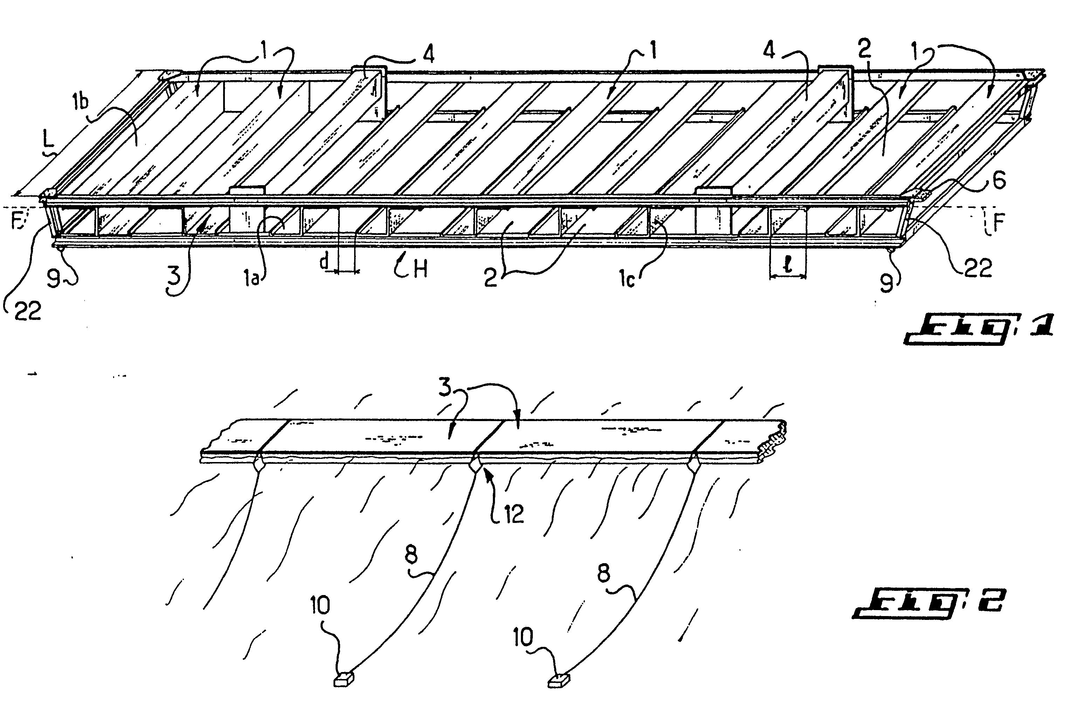

En référence à la figure 1, un mode de réalisation particulier d'un dispositif d'amortissement de houle ou clapot selon la présente invention comprend une pluralité d'éléments longitudinaux 1 espacés entre eux et sensiblement parallèlement au sens du déplacement de la houle symbolisé par la fleche H de manière à définir entre eux des couloirs 2 ouverts de canalisation du courant orbital de surface en créant ainsi un écoulement turbulent au sein du fluide.

Dans ce mode de réalisation particulier, on peut observer que ces éléments longitudinaux sont assemblés pour former un module individuel par fixation par tout moyen connu en soi tel que soudure, rivetage, boulonnage à un cadre 3 de forme sensiblement parallélèpipèdique et forme par une association de barres ou profilés de préférence en alliage léger avantageusement résistants à la corrosion du milieu environnant notamment à la corrosion marine.

Ces éléments longitudinaux 1 sont maintenus en flottaison sensiblement sous, et au voisinage immédiat de, la surface de l'eau à l'aide d'au moins un flotteur 4, de préférence deux flotteurs 4, qui sont avantageusement disposes aussi parallèlement au sens de deplacement de la houle afin d'offrir le minimum de surface d'impact relativement a la houle. Ces flotteurs sont d'un type classique connu en soi et sont par exemple formes par des boites parallélèpipèdiques fermées creuses, vides à l'interieur et naturellement étanches.

Selon un mode de realisation particulièrement avantageux, comme représenté, les éléments longitudinaux 1 sont prévus de manière à former une grande surface developpée et comprennent des surfaces horizontales, ici inférieure 1a et supérieure 1b, et verticale 1c sensiblement parallèles au sens de déplacement de la houle selon la flèche H, de manière à n'offrir qu'une résistance la plus faible possible à la houle.

On observera ainsi que les surfaces horizontales 1a, 1b et verticale 1c sont combinées entre elles de manière à permettre l'écoulement turbulent précité quelle que soit l'incidence de la houle.

Selon un mode de réalisation particulier, la longueur L des éléments longitudinaux 1 est en rapport avec la longueur d'onde de la houle, c'est-à-dire est d'un ordre de grandeur de la longueur d'onde de la houle.

On a représenté à la figure 1 la ligne de flottaison F de chaque module et on peut observer ainsi que les flotteurs 4 sont prévus de manière que les surfaces horizontales supérieures 1b soient sensiblement à la surface de l'eau de manière à ce que l'inertie de la masse associée de chaque module soit très grande et la fréquence propre du module soit très faible, ce qui entraîne une faible flottabilité de chaque module, effet qui est recherché.

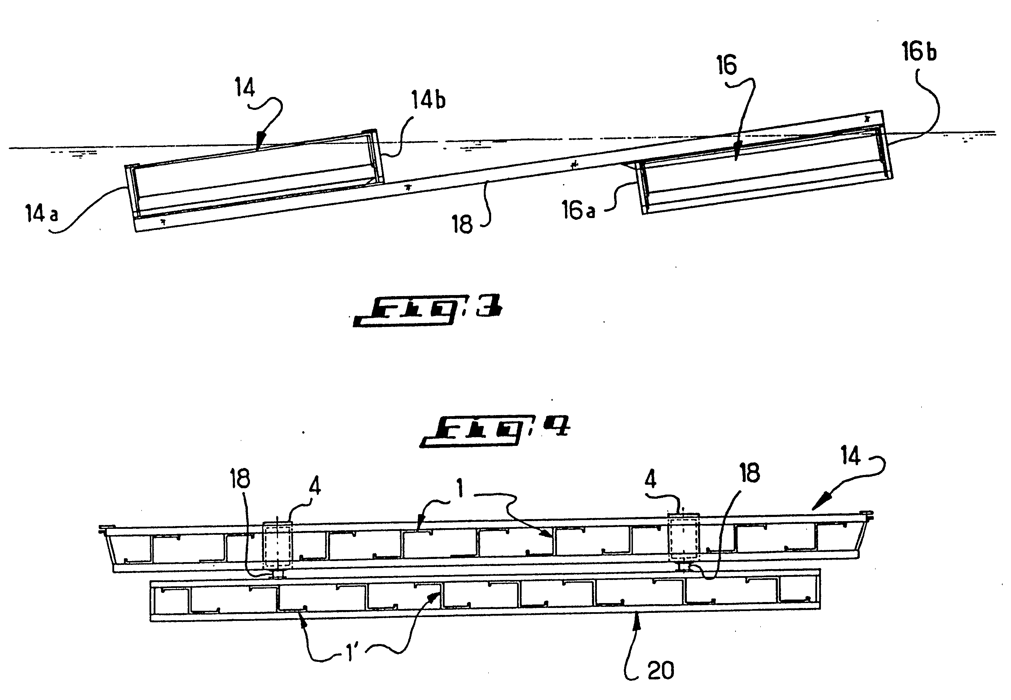

Comme représenté à la figure 2, et comme on peut le voir aussi à la figure 1, chaque module est associé au suivant par l'intermédiaire d'une liaison souple 6, réalisée par exemple par un matériau en élastomère fixé par tout moyen connu en soi au cadre 3 afin de constituer une chaîne flottante pratiquement continue. D'autre part, cette chaîne flottante est maintenue en position relativement fixe à l'aide d'une ligne de mouillage ordinaire comprenant une chaîne 8 de longueur appropriée au fond associé à un corps mort 10. On observera que selon la représentation de la figure 2, la chaîne de mouillage 8 est fixée sur des pistons d'ancrage 9 de deux modules contigus par une patte d'oie 12 ce qui renforce encore l'assemblage des modules.

En référence à la figure 3, on a représenté une association d'un module frontal 14 et d'un module arrière 16 par l'intermédiaire d'au moins un bras de liaison 18 sensiblement rigide;

D'autre part, selon un mode de réalisation préférentiel, chaque module 14, 16 est incliné d'un angle prédéterminé relativement à la surface en ayant la partie frontale respectivement 14a et 16a disposée à un niveau inférieur par rapport à la partie arrière respectivement 14b et 16b. Cet angle d'inclinaison est de préférence compris entre 5 et 15°.

Avantageusement, et comme représenté, chaque bras de liaison 18 passe sous le premier module frontal 14 et sur le deuxième module arrière 16 ce qui permet de realiser d'une manière simple l'inclinaison souhaitée. Ce mode de réalisation permet d'augmenter l'inertie de tangage du dispositif d'amortissement de la houle.

Une autre manière d'augmenter l'inertie de tangage consiste à prévoir au moins un bras arrière solidaire du cadre 3 dont l'extrémité libre est soutenue par un flotteur. Ce mode de réalisation n'a pas été représente étant donné sa simplicité.

Enfin, en référence à la figure 4, on a représenté un autre mode de réalisation particulièrement avantageux pour le cas de l'amortissement de très forte houle qui nécessiterait une longueur L des éléments longitudinaux 1 pratiquement prohibitive; Ainsi, dans ce mode de réalisation on prévoit un troisième module 20 disposé sous le premier module frontal 14 dont naturellement on a renforcé la flottabilité en modifiant la dimension des flotteurs 4;

Naturellement, il est possible de réaliser les éléments longitudinaux 1 selon diverses formes. La forme de réalisation actuellement préférée est celle représentée à la figure 1 pour laquelle les éléments longitudinaux 1 ont une section en coupe en forme de Z à branche centrale verticale;

On observera que pour un fonctionnement particulièrement efficace de l'amortissement les éléments longitudinaux ne doivent pas se chevaucher mais au contraire presenter un déport d qui est de préférence compris entre environ le tiers et la moitié de la largeur 1 de la surface horizontale la ou lb de l'élément longitudinal 1;

D'autre part selon le mode de réalisation de la figure 4, une configuration préférentielle entre le premier module 14 et le troisième module 20 est un aménagement en quinconce des éléments longitudinaux 1 du module 14 relativement à ceux l'du module 20;

Enfin, en vue de rendre possible un mouvement relatif entre les divers modules 14 mis côte à côte comme représenté à la figure 2, les cadres 3 définissant lesdits modules 14 ont leurs bords latéraux 22 parallèles au sens de déplacement de la flèche H qui sont inclinés vers l'intérieur de sorte que la face inférieure ait une surface plus faible que la face supérieure.

De préférence, le troisième module 20 est de dimension plus faible que le module frontal 14 comme représenté en figure 4.

**Revendications**

1. Procédé d'amortissement de houle ou clapot au moyen d'éléments longitudinaux rigides, maintenus en flottaison au voisinage de la surface de l'eau, disposés sensiblement parallèlement entre eux, leur forme, leurs dimensions et leur espacement étant tels, qu'ils créent un écoulement turbulent de l'eau, caractérisé en ce que l'on canalise le courant orbital de surface entre lesdits éléments longitudinaux, ceux-ci étant placés sensiblement parallèlement au sens de déplacement de la houle.

2. Procédé selon la revendication 1, caractérisé en ce que les éléments longitudinaux sont prévus de manière à former une grande surface développée et comprennent des surfaces horizontale et verticale sensiblement parallèles au sens de déplacement de la houle.

3. Procédé selon la revendication 1 ou 2, caractérisé en ce qu'on incline d'un angle prédéterminé les éléments longitudinaux de manière que leur extrémité frontale soit à un niveau inférieur par rapport à leur extrémité arrière.

4. Procédé selon l'une des revendications 1 à 3, caractérisé en ce qu'on prévoit la longueur des éléments longitudinaux en rapport avec la longueur d'onde de la houle.

5. Procédé selon l'une des revendications 1 à 3, caractérisé en ce qu'on augmente l'inertie de flottaison au tangage en associant un dispositif annexe flottant à l'arrière des éléments longitudinaux et à une certaine distance de ceux-ci, constitué de préférence par un autre jeu des mêmes éléments longtudinaux.

6. Dispositif d'amortissement de houle ou clapot, comprenant une pluralité d'éléments longitudinaux (1) rigides, espacés entre eux, maintenus en flottaison au voisinage de la surface de l'eau, disposés sensiblement parallèlement entre eux, leur forme, leurs dimensions et leur espacement étant tels, qu'il créent un écoulement turbulent de l'eau, caractérisé en ce que lesdits éléments longitudinaux (1) sont placés sensiblement parallèlement au sens de déplacement de la houle (flèche H) de manière à définir entre eux des couloirs ouverts (2) de canalisation du courant orbital de surface.

7. Dispositif selon la revendication 6, caractérisé en ce que lesdits éléments longitudinaux (1) sont prévus de manière à former une grande surface développée et comprennent des surfaces horizontale (1a, 1b) et verticale (1c) sensiblement parallèles au sens de déplacement de la houle (H).

8. Dispositif selon la revendication 6 ou 7, caractérisé en ce que les surfaces horizontale et verticale sont combinées entre elles de manière à permettre l'écoulement turbulent précité quelle que soit l'incidence.

9. Dispositif selon l'une des revendications 6 à 8, caratétrisé en ce que la longueur L des éléments longitudinaux (1) est en rapport avec la longueur d'onde de la houle.

10. Dispositif selon l'une des revendications 6 à 9, caractérisé en ce que les éléments longitudinaux (1) sont maintenus en flottaison sensiblement sous, et au voisinage immédiat de, la surface de l'eau, par exemple à l'aide de flotteur (4).

11. Dispositif selon l'une des revendications 6 à 10, caractérisé en ce que les éléments longitudinaux (1) sont assemblés en modules (3) associés eux-mêmes entre eux pour constituer une chaîne flottante pratiquement continue.

12. Dispositif selon l'une des revendications 6 à 11, caractérisé en ce que l'inertie de tangage est augmentée par la prévision d'au moins un bras arrière dont l'extrémité libre est soutenue par un flotteur.

13. Dispositif selon l'une des revendications 6 à 12, caractérisé en ce que l'inertie de tangage est augmentée par l'association d'un deuxième module (16) à l'arrière du premier module ou module frontal (14) relié à celuici par un bras de liaison (18) sensiblement rigide.

14. Dispositif selon l'une des revendications 6 à 13, caractérisé en ce que chaque module est incliné d'un angle prédéterminé relativement à la surface en ayant la partie frontale (14a, 16a respectivement) disposée à un niveau inférieur par rapport à la partie arrière (14b, 16b respectivement), cet angle d'inclinaison étant de préférence compris entre 5 et 15°.

15. Dispositif selon la revendication 13 ou 14, caractérisé en ce que le bras de liaison (18) passe sous le module frontal (14) et sur le module arrière (16). pat45.15

16. Dispositif selon l'une des revendications 13 à 15, caractérisé en ce que, en vue d'amortir de très fortes houles, on dispose un troisième module (20) sous le module frontal (14) dont les éléments longitudinaux (1') sont avantageusement disposés enquinconce relativement à ceux (1) du module frontal (14).

**Patentansprüche**

1. Verfahren zur Dämpfung der Dünung bzw. Kabbelung mittels in der Nähe der Wasseroberfläche schwimmend gehaltener, miteinander im wesentlichen gleichgerichteter, steifer Längsglieder, wobei deren Gestalt, deren Abmessungen und deren Abstand voneinander derart sind, dass sie eine turbulente Strömung des Wassers erzeugen, dadurch gekennzeichnet, dass man den kreisenden Oberflächenstrom zwischen den besagten Längsgliedern leitet, wobei diese im wesentlichen parallel zur Bewegungsrichtung der Dünung angeordnet sind.

2. Verfahren nach Anspruch 1, dadurch gekennzeichnet, dass die Längsglieder derart vorgesehen sind, dass sie eine grosse abgewickelte Fläche bilden und zur Bewegungsrichtung der Dünung im wesentlichen parallele, waagerechte und lotreche Flächen umfassen.

3. Verfahren nach Anspruch 1 oder 2, dadurch gekennzeichnet, dass man die Längsglieder um einen vorbestimmten Winkel neigt, so dass deren Stirnende in einer niedrigeren Höhe in bezug auf deren Hinterende liegt.

4. Verfahren nach einem der Ansprüche 1 bis 3, dadurch gekennzeichnet, dass man die Länge der Längsglieder im Verhältnis zur Wellenlänge der Dünung vorsieht.

5. Verfahren nach einem der Ansprüche 1 bis 3, dadurch gekennzeichnet, dass man die Schwimmfähigkeitsträgheit beim Stampfen erhöht indem man eine, vorzugsweise durch einen weiteren Satz der selben Längsglieder gebildete, schwimmende beiliegende Vorrichtung den Längsgliedern hinten in einem gewissen Abstand derselben zuordnet.

6. Vorrichtung zur Dämpfung der Dünung bzw. Kabbelung, mit einer Mehrzahl von im Abstand voneinander angeordneten, schwimmend in der Nähe der Wasseroberfläche gehaltenen, miteinander im wesentlichen gleichgerichteten, steifen Längsgliedern (1), deren Abmessungen und deren Abstand voneinander derart sind, dass sie eine turbulente Strömung des Wassers erzeugen, dadurch gekennzeichnet, dass die besagten Längsglieder (1) etwa parallel zur Bewegungsrichtung der Dünung (Pfeil H) angeordnet sind, um miteinander offene Durchgangsrinnen (2) zur Leitung des kreisenden Oberflächenstromes zu bilden.

7. Vorrichtung nach Anspruch 6, dadurch gekennzeichnet, dass die besagten Längsglieder (1) derart vorgesehen sind, dass sie eine grosse abgewickelte Fläche bilden und mit der Bewegungsrichtung der Dünung (H) im wesentlichen gleichgerichtete, waagerechte (1a, 1b) und lotrechte Flächen (1c) aufweisen.

8. Vorrichtung nach Anspruch 6 oder 7, dadurch gekennzeichnet, dass die waagerechten und lotrechten Flächen miteinander derart verbunden sind, dass sie die vorgenannte turbulente Strömung unabhängig von dem Einfall ermöglichen.

9. Vorrichtung nach einem der Ansprüche 6 bis 8, dadurch gekennzeichnet, dass die Länge L der Längsglüder (1) im Verhältnis zur Wellenlänge der Dünung steht.

10. Vorrichtung nach einem der Ansprüche 6 bis 9, dadurch gekennzeichnet, dass die Längsglieder (1) im wesentlichen unterhalb und in unmittelbarer Nähe der Wasseroberfläche z.B.

mit Hilfe von Schwimmkörpern (4) schwimmend gehalten werden.

11. Vorrichtung nach einem der Ansprüche 6 bis 10, dadurch gekennzeichnet, dass die Längsglieder (1) zu bausteinartigen Einheiten (3) zusammengefügt sind, welche selbst einander zugeordnet sind, um eine praktisch durchgehende schwimmende Kette zu bilden.

12. Vorrichtung nach einem der Ansprüche 6 bis 11, dadurch gekennzeichnet, dass die Trägheit beim Stampfen durch das Vorhandensein von wenigstens einem hinteren Arm, dessen freies Ende von einem Schwimmkörper unterstützt ist, erhöht wird.

13. Vorrichtung nach einem der Ansprüche 6 bis 12, dadurch gekennzeichnet, dass die Trägheit beim Stampfen durch die Zuordnung einer zweiten bausteinartigen Einheit (16) hinter der, mit dieser durch einen im wesentlichen starren Verbindungsarm (18) verbundenen, ersten bausteinartigen Einheit bzw. bausteinartigen Stirneinheit (14) erhöht wird.

14. Vorrichtung nach einem der Ansprüche 6 bis 13, dadurch gekennzeichnet, dass jede bausteinartige Einheit um einen in bezug auf die Fläche vorbestimmten Winkel geneigt ist, wobei der Stirnteil (jeweils 14a, 16a) in einer niedrigeren Höhe in bezug auf den Hinterteil (jeweils 14b, 16b) liegt, wobei dieser Neigungswinkel vorzugsweise zwischen 5 und 15° liegt.

15. Vorrichtung nach Anspruch 13 oder 14, dadurch gekennzeichnet, dass der Verbindungsarm (18) unterhalb der bausteinartigen Stirneinheit (14) und oberhalb der hinteren bausteinartigen Einheit (16) verläuft.

16. Vorrichtung nach einem der Ansprüche 13 bis 15, dadurch gekennzeichnet, dass, zwecks Dämpfung sehr starker Dünungen, man eine dritte bausteinartige Einheit (20) unterhalb der bausteinartigen Stirneinheit (14) deren Längsglieder (1') in vorteilhafter Weise gegenüber denjenigen (1) der bausteinartigen Stirneinheit (14) versetzt angeordnet sind, anordnet.

## Claims

1. Method of damping the swell or lapping by means of rigid longitudinal elements kept floating in the vicinity of the water surface, disposed substantially in parallel relation to each other, their shapes, their sizes and their spacings being such that they would create a turbulent flow of the water, characterized in that the orbital surface stream is channelled between the said longitudinal elements, these being placed substantially in parallel relation to the direction of displacement of the swell.

2. Method according to claim 1, characterized in that the longitudinal elements are provided so as to form a large developped surface and comprising horizontal and vertical surfaces substantially parallel to the direction of displacement of the swell.

3. Method according to claim 1 or 2, characterized in that the longitudinal elements are caused to beinclined by a predetermined angle so that their front end be at a lower level with respect to their rear end.

4. Method according to one of claims 1 to 3, characterized in that the lengths of the longitudinal elements are provided in correlation with the wavelength of the swell.

5. Method according to one of claims 1 to 3, characterized in that the buoyancy inertia with respect to pitching is increased by associating an auxiliary floating device with the rear of the longitudinal elements and at some distance thereof, preferably constituted by another set of the same longitudinal elements.

6. Device for damping the swell or lapping comprising a plurality of rigid longitudinal elements (1) spaced from each other, kept floating in the vicinity of the water surface, disposed substantially in parallel relation to one another, their shapes, their sizes and their spacings being such that they create a turbulent flow of the water, characterized in that the said longitudinal elements (1) are placed substantially in parallel relation to the direction of displacement of the swell (arrow H) so as to define therebetween open gullies (2) for channelling the orbital surface stream.

7. Device according to claim 6, characterized in that the said longitudinal elements (1) are provided so as to form a large developped surface and comprise horizontal (1a, 1b) and vertical surfaces (1c) substantially parallel to the direction of displacement of the swell (H).

8. Device according to claim 6 or 7, characterized in that the horizontal and vertical surfaces are combined with each other so as to permit the aforesaid turbulent flow under whatever incidence.

9. Device according to one of claims 6 to 8, characterized in that the lengths L of the longitudinal elements (1) are correlated with the wavelength of the swell.

10. Device according to one of claims 6 to 9, characterized in that the longitudinal elements (1) are kept floating substantially under and in the immediate vicinity of the water surface, for instance by means of floats (4).

11. Device according to one of claims 6 to 10, characterized in that the longitudinal elements (1) are assembled into modules (3) themselves associated with one another to constitute a practically continuous floating chain.

12. Device according to one of claims 6 to 11, characterized in that the inertia of pitching is increased by the provision of at least one rear arm the free end of which is backed by a float.

13. Device according to one of claims 6 to 12, characterized in that the inertia of pitching is increased by the association of a second module (16) with the rear of the first module or front module (14) connected thereto by a substantially rigid connecting arm (18).

14. Device according to one of claims 6 to 13, characterized in that each module is inclined by a predetermined angle in relation to the surface while having the front portion (14a, 16a, respectively) disposed at a lower level with respect to the rear portion (14b, 16b, respectively), this angle of inclination lying preferably between 5 and 15°.

15. Device according to claim 13 or 14, characterized in that the connecting arm (18) extends below the front module (14) and above the rear module (16).

16. Device according to one of claims 13 to 15, characterized in that with a view to damp very strong swells, a third module (20) is disposed underneath the front module (14) the longitudinal elements (1') of which are advantageously disposed in staggered relationship with those (1) of the front module (14).

**Fig. 1**

**Fig. 2**

0 094 853

_FIG. 3_

_FIG. 4_

0 094 853